# EUROPEAN PATENT APPLICATION

(11) **EP 4 194 574 A1**
(43) Date of publication of application: **14.06.2023**
(21) Application number: 21854057.3
(22) Date of filing: 30.07.2021
(51) Int. Cl.: C22C 11/06, C22F 1/00, C22F 1/12, H01M 4/14

(54) **LEAD ALLOY, POSITIVE ELECTRODE FOR LEAD STORAGE BATTERIES, LEAD STORAGE BATTERY, AND POWER STORAGE SYSTEM**

(30) Priority: 05.08.2020 JP 2020133406
(71) Applicant: FURUKAWA ELECTRIC CO., LTD., Chiyoda-ku Tokyo 100-8322 (JP); The Furukawa Battery Co., Ltd., Yokohama-shi, Kanagawa-ken 240-0006 (JP)
(72) Inventor: KANEKO. Hiroshi, Tokyo 100-8322 (JP); OGIWARA, Yoshiaki, Tokyo 100-8322 (JP); YAMAUCHI, Miho, Tokyo 100-8322 (JP); TANAKA, Akira, Tokyo 100-8322 (JP); NAKAMURA, Hideto, Tokyo 100-8322 (JP); ARAGAKI, Masanobu, Tokyo 100-8322 (JP); FURUKAWA, Jun, Jyoban-shimofunao-machi, Iwaki-shi, Fukushima 972- 8501 (JP); MANGAHARA, Toru, Jyoban-shimofunao-machi, Iwaki-shi, Fukushima 972- 8501 (JP); YAMADA, Keizo, Jyoban-shimofunao-machi, Iwaki-shi, Fukushima 972- 8501 (JP); KOIDE, Ayano, Jyoban-shimofunao-machi, Iwaki-shi, Fukushima 972- 8501 (JP); SATO, Atsushi, Jyoban-shimofunao-machi, Iwaki-shi, Fukushima 972- 8501 (JP)
(74) Representative: Grünecker Patent- und Rechtsanwälte PartG mbB
(86) International application number: PCT/JP2021/028490
(87) International publication number: WO 2022/030416

(57) **Abstract**

There is provided a lead alloy capable of manufacturing a positive electrode for lead storage battery less likely to cause corrosion penetrating through a lead layer for positive electrode in the thickness direction. The lead alloy contains: 0.4% by mass or more and 2% by mass less of tin and 0.004% by mass or less of bismuth, with the balance being lead and inevitable impurities. When image analysis of a crystal orientation distribution map created by analyzing the surface of the lead alloy by an electron backscatter diffraction method is performed, intersection points of misorientation boundaries between crystal grains with a crystal misorientation of 5° or more and a straight line extending in one specific direction are extracted, and the distances between two adjacent intersection points among the extracted intersection points are measured, the average value of the distances is 50 um or less.

## Description

### Technical Field

The present invention relates to a lead alloy, a positive electrode for lead storage battery, a lead storage battery, and a power storage system.

### Background Art

A positive electrode of a lead storage battery includes a lead layer for positive electrode formed of a lead alloy and an active material arranged on the surface of the lead layer for positive electrode. Conventional positive electrodes for lead storage batteries (see, for example, PTL 1) have been formed of well-known lead and lead alloys.

### Citation List

### Patent Literature

PTL 1: WO 2013/073420

### Summary of Invention

### Technical Problem

However, when the lead storage battery is used, the lead layer for positive electrode is gradually corroded. At this time, the corrosion proceeds along the grain boundaries of crystal grains of the lead alloy used for the lead layer for positive electrode, which has posed a risk that the corrosion penetrates through the lead layer for positive electrode in the thickness direction. In particular, this problem has been more noticeable when the lead layer for positive electrode is reduced in thickness to reduce the weight of the battery, improve the utilization rate of the volume inside the battery, and reduce the usage amount of the lead, for example.

When such penetration occurs, an electrical conduction path is broken, which has posed a risk that the internal resistance of the battery increases, so that desired characteristics cannot be exhibited. Further, a bipolar lead storage battery, for example, has posed a concern that the battery characteristics deteriorate due to a phenomenon referred to as a so-called liquid junction in which, due to the formation of through-holes in the lead layer for positive electrode, the corrosion further proceeds into other members, so that electrolytic solutions on the positive electrode side and the negative electrode side flow into each other, and in the worst case, the battery becomes unusable.

It is an object of the present invention to provide a lead alloy capable of suppressing the proceed of intergranular corrosion, a lead layer for positive electrode in which penetration in the thickness direction due to corrosion is less likely to occur even when the thickness is reduced, a positive electrode for lead storage battery using the lead layer for positive electrode, a lead storage battery constituted using the positive electrode for lead storage battery, less likely to cause a rise in the internal resistance, and capable of prolonging the life, and a power storage system.

### Solution to Problem

A lead alloy according to one aspect of the present invention contains: 0.4% by mass or more and 2% by mass less of tin and 0.004% by mass or less of bismuth, with the balance being lead and inevitable impurities, in which, when image analysis of a crystal orientation distribution map created by analyzing the surface by an electron backscatter diffraction method is performed, intersection points of misorientation boundaries between crystal grains with a crystal misorientation of 5° or more and a straight line extending in one specific direction are extracted, and the distances between two adjacent intersection points among the extracted intersection points are measured, the average value of the distances is 50 um or less.

A lead alloy according to a different aspect of the present invention contains: 0.4% by mass or more and 2% by mass less of tin and 0.004% by mass or less of bismuth and further at least one of 0.1% by mass or less of calcium and 0.1% by mass or less of silver, with the balance being lead and inevitable impurities, in which, when image analysis of a crystal orientation distribution map created by analyzing the surface by an electron backscatter diffraction method is performed, intersection points of misorientation boundaries between crystal grains with a crystal misorientation of 5° or more and a straight line extending in one specific direction are extracted, and the distances between two adjacent intersection points among the extracted intersection points are measured, the average value of the distances is 50 µm or less. It is more preferable that the average value of the distances is 30 um or less.

A positive electrode for lead storage battery according to a further different aspect of the present invention includes: a lead layer for positive electrode formed of the lead alloy according to the one aspect or the different aspect; and an active material arranged on the surface of the lead layer for positive electrode, in which the thickness of the lead layer for positive electrode is 0.5 mm or less.

A lead storage battery according to a still further different aspect of the present invention includes: the positive electrode for lead storage battery according to the still further different aspect.

A power storage system according to a yet still further different aspect of the present invention includes: the lead storage battery according to the still further different aspect, the power storage system being configured to store power in the lead storage battery.

### Advantageous Effects of Invention

The present invention can provide a lead alloy capable of making the corrosion penetrating through a lead layer for positive electrode in the thickness direction less likely to occur even when the thickness is reduced, a positive electrode for lead storage battery formed of the lead alloy, a lead storage battery constituted using the positive electrode for lead storage battery and less likely to cause a rise in the internal resistance, and a power storage system.

### Brief Description of Drawings

FIG. 1 is a cross-sectional view for explaining the structure of a bipolar lead storage battery, which is one embodiment of a lead storage battery according to the present invention;
FIG. 2 is a view for explaining one embodiment of a power storage system according to the present invention;
FIG. 3 illustrate views for explaining the size and the corrosion of crystal grains in a lead alloy of a conventional example and a lead alloy in example of the present invention; and
FIG. 4 is a view for explaining a method for performing image analysis of a crystal orientation distribution map created by analyzing the surface of a lead alloy by an electron backscatter diffraction method.

### Description of Embodiments

One embodiment of the present invention will be described. This embodiment describes one example of the present invention. Further, this embodiment can be variously altered or modified and embodiments obtained by such alternations or modifications may also be included in the present invention.

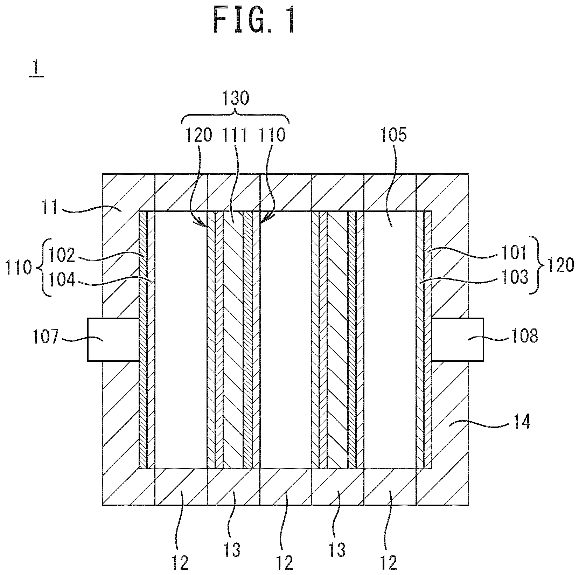

The structure of a lead storage battery 1 according to one embodiment of the present invention is described with reference to FIG. 1. The lead storage battery 1 illustrated in FIG. 1 is a bipolar lead storage battery and includes: a first plate unit in which a negative electrode 110 is fixed to a flat plate-like first plate 11; a second plate unit in which an electrolytic layer 105 is fixed to a frame plate-like second plate 12; a third plate unit in which a positive electrode 120, a substrate 111, and the negative electrode 110 are fixed in order to a frame plate-like third plate 13; and a fourth plate unit in which the positive electrode 120 is fixed to a flat plate-like fourth plate 14, and has a substantially rectangular shape by combining the first plate unit, the second plate unit, the third plate unit, and the fourth plate unit with each other.

A negative electrode terminal 107 is fixed to the first plate 11 in a state of being electrically connected to the negative electrode 110 fixed to the first plate 11.

A positive electrode terminal 108 is fixed to the fourth plate 14 in a state of being electrically connected to the positive electrode 120 fixed to the fourth plate 14.

The second plate unit and the third plate unit can be alternately provided in any number of stages according to a desired power storage capacity.

The first to fourth plates 11, 12, 13, 14 and the substrate 111 are formed of a well-known molded resin, for example.

The electrolytic layer 105 contains a glass fiber mat impregnated with an electrolytic solution, such as sulfuric acid, or the like, for example.

The negative electrode 110 contains a lead layer for negative electrode 102 containing a well-known lead foil and an active material layer for negative electrode 104, for example.

The positive electrode 120 contains a lead layer for positive electrode 101 containing a foil of a lead alloy of this embodiment described later and an active material layer for positive electrode 103.

The positive electrode 120 and the negative electrode 110 are separately fixed to the front surface and the back surface of the substrate 111 and are electrically connected by an appropriate method. Alternatively, the positive electrode 120 and the negative electrode 110 may be separately fixed to one surface of each of the two substrates 111, and may be fixed in a state of electrically connecting the other surfaces.

The plates 11 to 14 are fixed to each other by an appropriate method such that the inside is hermetically sealed to prevent the outflow of an electrolyte.

In the lead storage battery 1 of this embodiment having such a configuration, the substrate 111, the lead layer for positive electrode 101, the active material layer for positive electrode 103, the lead layer for negative electrode 102, and the active material layer for negative electrode 104 constitute a bipolar electrode 130, which is an electrode for lead storage battery. The bipolar electrode is an electrode in which a single electrode functions as both a positive electrode and a negative electrode.

The lead storage battery 1 of this embodiment has a battery configuration such that a plurality of cells is alternately stacked and assembled, so that the cells are connected in series, the cells each being obtained by interposing the electrolytic layer 105 between the positive electrode 120 having the active material layer for positive electrode 103 and the negative electrode 110 having the active material layer for negative electrode 104.

This embodiment describes the bipolar lead storage battery including the bipolar electrode in which a single electrode functions as both a positive electrode and a negative electrode as an example of the lead storage battery. However, the lead storage battery of this embodiment may be a lead storage battery which separately includes an electrode having a positive electrode function and an electrode having a negative electrode function, and in which both a positive electrode and a negative electrode, which are separate bodies, are alternately arranged.

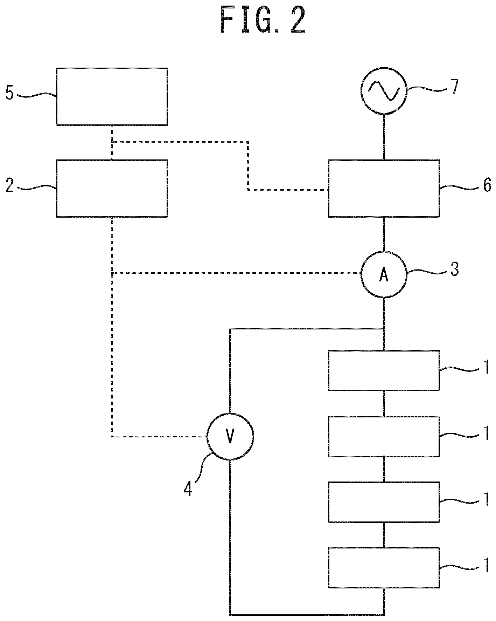

A power storage system can be constituted using the lead storage battery 1 of this embodiment illustrated in FIG. 1. FIG. 2 illustrates an example of the power storage system. The power storage system in FIG. 2 includes: a battery pack containing a plurality of lead storage batteries 1, 1··· (four in the example in FIG. 2) connected in series; an AC-DC converter 6 performing AC-DC conversion (switching between AC power and DC power) in charging and discharging the battery pack; a current sensor 3 installed between the battery pack and the AC-DC converter 6 and measuring a charge/discharge current in charging and discharging the battery pack; a voltage sensor 4 measuring the voltage of the battery pack; a power storage state monitoring device 2 receiving measurement data transmitted from the current sensor 3 and the voltage sensor 4 and implementing state determination and alarm determination of the battery pack based on the received measurement data; and an energy management system 5 receiving power storage state information transmitted by the power storage state monitoring device 2 based on the implemented state determination and alarm determination and determining whether the charge or the discharge of the battery pack is implemented based on the received power storage state information.

The energy management system 5 determines whether the charge or the discharge of the battery pack is implemented based on the power storage state information received from the power storage state monitoring device 2, and sends a signal instructing the implementation of the charge or the discharge to the AC-DC converter 6. When receiving the signal instructing the implementation of the discharge, the AC-DC converter 6 converts DC power discharged from the battery pack into AC power and outputs the AC power to a commercial power system 7. On the other hand, when receiving the signal instructing the implementation of the charge, the AC-DC converter 6 converts AC power input from the commercial power system 7 into DC power to charge the battery pack. The number of the lead storage batteries 1 connected in series is determined by the input voltage range of the AC-DC converter 6.

### <About lead alloy constituting lead layer for positive electrode 101>

Herein, the thickness of the lead layer for positive electrode 101 is set to 0.5 mm or less in this embodiment. The lead layer for positive electrode 101 is formed of a lead alloy satisfying the following two conditions A and B such that a problem with growth is less likely to occur even with such a thickness.

### (Condition A)

A lead alloy contains 0.4% by mass or more and 2% by mass or less of tin (Sn) and 0.004% by mass or less of bismuth (Bi), with the balance being lead (Pb) and inevitable impurities or a lead alloy contains 0.4% by mass or more and 2% by mass or less of tin and 0.004% by mass or less of bismuth and further contains at least one of 0.1% by mass or less of calcium and 0.1% by mass or less of silver with the balance being lead and inevitable impurities.

(Condition B) When image analysis of a crystal orientation distribution map created by analyzing the surface of the lead alloy by an electron backscatter diffraction method is performed, intersection points of misorientation boundaries between crystal grains with a crystal misorientation of 5° or more and a straight line extending in one specific direction are extracted, and the distances between two adjacent intersection points among the extracted intersection points are measured, the average value of the distances is 50 um or less. It is more preferable that the average value of the distances is 30 µm or less.

The lead storage battery 1 and the power storage system of this embodiment have the lead layer for positive electrode 101 formed of the lead alloy, and therefore a rise in the internal resistance is less likely to occur.

More specifically, the lead layer for positive electrode 101 is formed of the lead alloy, and therefore the proceed of the intergranular corrosion is suppressed, and the penetration in the thickness direction is less likely to occur. This prevents the breakage of an electrical conduction path. Therefore, when used as a battery, the effect that the rise in the internal resistance is less likely to occur is exhibited. A further detailed description is given below.

### [About condition A]

When tin is compounded in the lead alloy, the adhesion between the lead layer for positive electrode 101 and the active material layer for positive electrode 103 formed of the lead alloy is improved. Further, when calcium is compounded in the lead alloy, the crystal grains of the lead alloy become fine. Further, when silver is compounded in the lead alloy, the crystal grains of the lead alloy become fine. Therefore, when the lead alloy contains tin and at least one of calcium and silver, the crystal grains of the lead alloy become smaller, making it difficult for the electrolyte to enter, and thus the effect that the proceed of the intergranular corrosion can be effectively suppressed is exhibited.

The tin content is more preferably 0.7% by mass or more, more preferably 1.0% by mass or more, particularly preferably 1.3% by mass or more, and most preferably 1.6% by mass or more. When the tin content is in such a range, misorientation boundaries are likely to be formed in the lead alloy.

To further suppress the occurrence of the corrosion penetrating through the lead layer for positive electrode in the thickness direction, the calcium content is more preferably 0.07% by mass or less, still more preferably 0.04% by mass or less, and particularly preferably 0.02% by mass or less.

The silver content is more preferably 0.03% by mass or less to suppress the separation of the silver phase and improve the corrosion resistance of the lead alloy.

Calcium and silver may be positively added to the lead alloy. However, even when calcium and silver are not positively added, calcium and silver are sometimes included as inevitable impurities due to mixing from bare metals or the like. The maximum amount of both calcium and silver that can be contained as the inevitable impurities is 0.012% by mass.

On the other hand, when bismuth is contained in the lead alloy, the formability of the lead alloy by rolling or the like tends to decrease. More specifically, bismuth is one of the impurities that are preferably not contained as much as possible in the lead alloy of this embodiment. Therefore, the bismuth content in the lead alloy needs to be 0.004% by mass or less and is most preferably 0% by mass. However, considering the cost of the lead alloy, the bismuth content is preferably 0.0004% by mass or more.

On the other hand, the lead alloy sometimes contains elements other than lead, tin, calcium, silver, and bismuth. The elements are impurities inevitably contained in the lead alloy. The total content of the elements other than lead, tin, calcium, silver, and bismuth in the lead alloy is preferably 0.01% by mass or less and most preferably 0% by mass.

As described above, the lead alloy of this embodiment forming the lead layer for positive electrode 101 is the lead alloy containing 0.4% by mass or more and 2% by mass or less of tin and 0.004% by mass or less of bismuth, with the balance being lead and inevitable impurities or the lead alloy containing 0.4% by mass or more and 2% by mass or less of tin and 0.004% by mass or less of bismuth and further containing at least one of 0.1% by mass or less of calcium and 0.1% by mass or less of silver, with the balance being lead and inevitable impurities. The lead alloy of this embodiment preferably does not contain bismuth as impurities. However, when bismuth is contained, the content needs to be 0.004% by mass or less. When the elements other than lead, tin, calcium, silver, and bismuth are contained as inevitable impurities in the lead alloy of this embodiment, the total content of the elements is preferably 0.01% by mass or less.

### [About condition B]

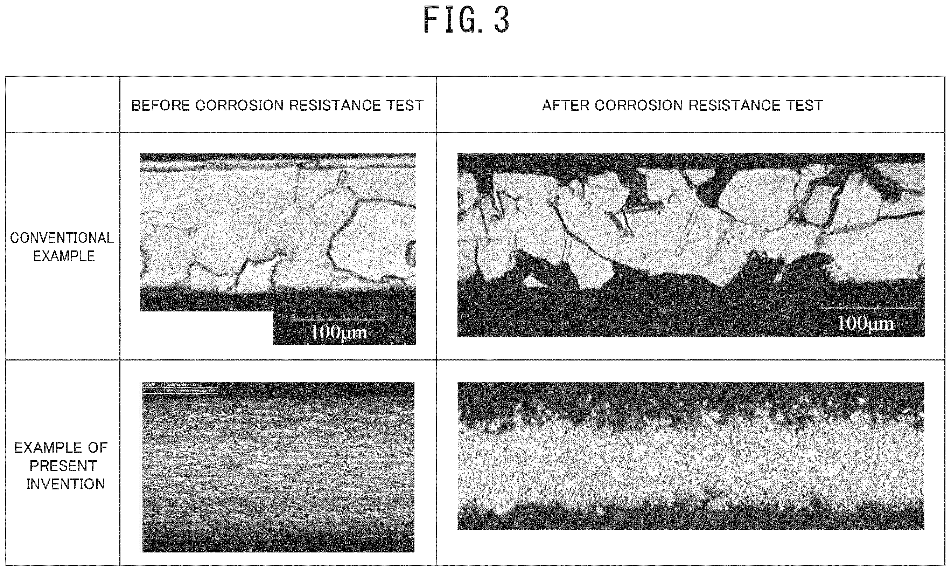

In common metals, lattice defects are introduced by deformation, and the introduced lattice defects are rearranged, so that misorientation boundaries are formed. On the other hand, in lead and lead alloys, the lattice defects are not accumulated due to the low thermal stability, and therefore recrystallization occurs at room temperature and coarse crystal grains are formed. Therefore, a rolled foil of a conventional lead alloy (foil manufactured by rolling a lead alloy) has coarse crystal grains as illustrated in the view illustrated in the column of Before corrosion resistance test of Conventional Example in FIG. 3. Therefore, when the rolled foil is corroded, grain boundaries of the coarse crystal grains of the lead alloy are corroded, so that the corrosion penetrating through the rolled foil in the thickness direction (horizontal direction of the sheet surface of FIG. 3) has been likely to occur (see the view illustrated in the column of After corrosion resistance test of Conventional Example in FIG. 3).

Therefore, when the lead layer for positive electrode formed of the conventional lead alloy is reduced in thickness to increase the amount of an active material arranged on the surface, the grain boundaries of the coarse crystal grains are corroded in the case where the lead layer for positive electrode is corroded, and the corrosion penetrating through the lead layer for positive electrode in the thickness direction has been likely to occur. As a result, there has been a risk of a rise in the internal resistance of the lead storage battery. Further, there has been a risk of the occurrence of a liquid junction between the positive electrode and the negative electrode.

As a result of an examination by the present inventors, it has been found that, when intersection points of misorientation boundaries between the crystal grains with a crystal misorientation of 5° or more and a straight line extending in one specific direction are extracted, and the distances between two adjacent intersection points among the extracted intersection points are measured, the average value of the distances is set to 50 um or less, and thus the proceed of such corrosion can be suppressed and the penetration can be prevented.

More specifically, the lattice defects are in a dense state in grain boundaries of the crystal grains with a crystal misorientation of 5° or more, and therefore it is considered that base elements, such as Sn, are likely to concentrate and serve as corrosion starting point sites. Conversely, when a large number of the corrosion starting point sites are provided, the concentration degree of the base elements at each corrosion starting point site can be suppressed to a low level, and the proceed of the corrosion from each corrosion starting point site can be suppressed.

As a result of an intensive examination based on the assumption, it has been found that, when intersection points of misorientation boundaries between the crystal grains with a crystal misorientation of 5° or more and a straight line extending in one specific direction are extracted, and the distances between two adjacent intersection points among the extracted intersection points are measured, the average value of the distances is set to 50 µm or less, and thus the proceed of such corrosion can be suppressed.

As described above, the lead alloy of this embodiment has fine crystal grains with a grain size of 0.1 um or more and 50 um or less, for example, by devising the alloy composition and a manufacturing method (see the view illustrated in the column of before corrosion resistance test of example of the present invention in FIG. 3). Therefore, even when the rolled foil of the lead alloy of this embodiment is corroded and the grain boundaries of the crystal grains are corroded, the corrosion penetrating through the rolled foil in the thickness direction is less likely to occur (see the view illustrated in the column of after corrosion resistance test of example of the present invention in FIG. 3). Therefore, the formation of the lead layer for positive electrode of the positive electrode for lead storage battery using the lead alloy of this embodiment can provide a lead storage battery less likely to cause a raise in the internal resistance.

Further, when the lead layer for positive electrode 101 of the positive electrode for lead storage battery is formed of the lead alloy of this embodiment, the corrosion penetrating through the lead layer for positive electrode in the thickness direction is less likely to occur even when the lead layer for positive electrode has a small thickness. Therefore, when the lead layer for positive electrode is formed of the lead alloy of this embodiment, the thickness of the lead layer for positive electrode can be reduced to 0.5 mm or less, and therefore the battery capacity can be correspondingly increased. For example, supposing that a positive electrode has been conventionally constituted by applying a 1 mm thick active material to a 1 mm thick lead layer for positive electrode, when a positive electrode is constituted by applying a 1.8 mm thick active material to a 0.2 mm thick lead layer for positive electrode, the amount of the active material increases by 1.8 times, and therefore the battery capacity can be increased by about 1.8 times that in a conventional lead storage battery at the same thickness.

Further, when the bipolar lead storage battery is adopted as the lead storage battery, the bipolar lead storage battery can be used at a higher C-rate than that in a conventional lead storage battery with a low internal resistance because the bipolar lead storage battery has high internal resistance. This can reduce the size of the lead storage battery.

When the size of lead storage battery is small, the size of containers or the like can be reduced in a case of applying the lead storage battery to industrial batteries. Therefore, when the lead storage battery is buried underground, for example, the advantage is particularly large. When the lead storage battery is used for mobilities, such as automobiles, the weight of automobiles and the like can be reduced, which leads to an improvement of fuel efficiency and also enables a reduction in space in which the lead storage battery is mounted in automobiles and the like.

Further, the lead layer for positive electrode can be reduced in thickness, and therefore the lead storage battery can be reduced in weight. This can facilitate the installation work of the lead storage battery.

When the thickness of the lead layer for positive electrode 101 is set to 0.37 mm or less and more preferably 0.25 mm or less, the effect of the present invention that the rise in the internal resistance is less likely to occur is more likely to be exhibited.

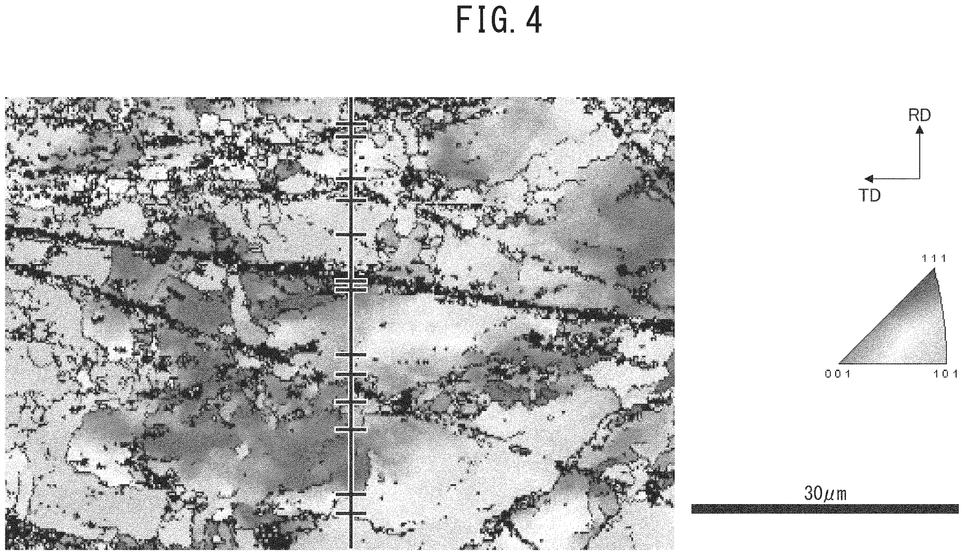

The average grain size of the crystal grains of the lead alloy, i.e., the average value of the intervals of the misorientation boundaries between the crystal grains, can be evaluated by performing image analysis of a crystal orientation distribution map created by analyzing the surface of the lead alloy by an electron backscatter diffraction method. A method for evaluating the average grain size of the crystal grains of the lead alloy is described with reference to FIG. 4 taking a case of analyzing the rolled surface of the rolled foil manufactured by rolling the lead alloy by an electron backscatter diffraction method as an example. In FIG. 4, RD means the rolling direction of the rolled foil and TD means a direction perpendicular to the rolling direction (width direction) of the rolled foil.

First, the rolled surface of the rolled foil manufactured by rolling the lead alloy is analyzed by an electron backscatter diffraction method, and a crystal orientation distribution map as illustrated in FIG. 4 is created. FIG. 4 is a black-and-white image, but the crystal grains with different crystal orientations are displayed in different shades of gray (grayscale), in which the misorientation boundaries are displayed between the crystal grains with a crystal misorientation of 5° or more.

Next, image analysis of this crystal orientation distribution map is performed. In this image analysis, a straight line extending in one specific direction (hereinafter sometimes referred to as "specific straight line") is set on the crystal orientation distribution map, and then intersection points of the specific straight line and the misorientation boundaries between the crystal grains with a crystal misorientation of 5° are extracted. The intersection points for one or two or more specific straight lines are extracted, and then the distances between two adjacent intersection points on the same specific straight line among the extracted intersection points are individually measured. Then, the average value of the measured distances is calculated. A larger number of the intersection points are usually extracted, and therefore there are many combinations of the two adjacent intersection points. The average value may be calculated using all of the combinations or the average value may be calculated using some of the combinations.

The direction in which the specific straight line extends is not particularly limited and may be set in advance in a desired direction in the image analysis. For example, the direction can be set in the same direction as the rolling direction of the rolled foil or can be set in the same direction as the direction perpendicular to the rolling direction of the rolled foil. In the example of FIG. 4, the direction in which the specific straight line extends and the rolling direction of the rolled foil are set in the same direction. More specifically, a straight line extending in the rolling direction substantially in the center in the vertical direction of the sheet surface of FIG. 4 is the specific straight line. When the image analysis is performed using two or more of the specific straight lines, the directions in which all of the specific straight lines extend are set in the same direction.

In the example of FIG. 4, the number of the intersection points of the specific straight line and the misorientation boundaries between the crystal grains with a crystal misorientation of 5° or more is 13. Short horizontal lines perpendicular to the specific straight line (short lines extending in the direction perpendicular to the rolling direction) indicate the positions of the intersection points of the specific straight line and the misorientation boundaries. Therefore, in the example of FIG. 4, there are 12 pairs of the adjacent two intersection points on the specific straight line, and therefore the distance between the two intersection points is measured for these 12 pairs and the average value of the distances is calculated.

The average value of the distances calculated as described above is the average value of the intervals of the misorientation boundaries between the crystal grains, and therefore the average grain size of the crystal grains of the lead alloy can be evaluated based on the average value of the distances. More specifically, a case where the average value of the distances is small means that the average grain size of the crystal grains of the lead alloy is small and a case where the average value of the distances is large means that the average grain size of the crystal grains of the lead alloy is large.

When the average value of the distances is 50 µm or less, the average grain size of the crystal grains of the lead alloy forming the rolled foil is small, and therefore the corrosion penetrating through the rolled foil in the thickness direction is less likely to occur. Therefore, when the lead layer for positive electrode of the electrode for lead storage battery is formed of such a rolled foil, the rise in the internal resistance of the lead storage battery is less likely to occur. The average value of the distances needs to be 50 um or less, preferably 30 um or less, and more preferably 20 um or less.

The average value of the distances can be set to about 20 µm, for example, immediately after the manufacture of the rolled foil. However, the recrystallization of the crystal grains sometimes occurs during the use of the lead storage battery, and therefore the average value of the distances gradually decreases to be 50 µm, for example, in some cases. When the lead storage battery is used in a high-temperature environment, the recrystallization is likely to occur, and therefore the average value of the distances is likely to increase.

### [Method for refining crystal grains of lead alloy]

Hereinafter, as an example of a method for refining the crystal grains in the lead alloy of this embodiment (method for reducing the average value of the distances), a method for refining the crystal grains by rolling is described.

The lattice defects, such as dislocations, introduced by the rolling are rearranged and low-angle misorientation boundaries are formed. Thus, a certain strain amount is required in the rolling. Therefore, the draft in the rolling is preferably set to more than 5%, more preferably set to 10% or more, and still more preferably set to 20% or more.

However, when the draft is excessively high, the lattice defects have an excessively high density, and thus are thermally unstable, possibly causing recrystallization. Further, there is a risk that the surface roughness of the lead alloy after the rolling increases. Thus, the draft in the rolling is preferably set to 99% or less, more preferably set to 90% or less, and still more preferably set to 70% or less.

To further positively refine the crystal grains of the lead alloy, heat treatment (intermediate heat treatment) at 300°C or more is preferably applied to the lead alloy before the rolling for homogenization of the solute elements. Further, the rolling and the intermediate heat treatment may be repeated several times. In that case, it is preferable to apply the intermediate heat treatment at 300°C or more twice or more.

### [Examples]

The present invention is more specifically described with reference to Examples and Comparative Examples below.

Alloy sheets containing lead alloys having the alloy compositions shown in Table 1 were manufactured by melting and casting. The alloy sheets were subjected to heat treatment and rolling to produce rolled foils. A detailed manufacturing method is as follows.

For Examples 1 to 7, 1 mm thick alloy sheets were rolled with the draft set to 70%, and the thickness was set to 0.3 mm. Next, the 0.3 mm thick rolled foils were subjected to intermediate heat treatment at a temperature of 315°C for a time of 30 min, and then further rolled with the draft set to 50% to give 0.15 mm thick rolled foils.

For Examples 8 to 10, 2 mm thick alloy sheets after subjected to the intermediate heat treatment (first intermediate heat treatment) at a temperature of 315°C for a time of 30 min were rolled with the draft set to 55%, and the thickness was set to 0.9 mm. Next, the 0.9 mm thick rolled sheets were subjected to the intermediate heat treatment (second intermediate heat treatment) at a temperature of 315°C for a time of 30 min, and then further rolled with the draft set to 50% to give 0.45 mm thick rolled foils.

For Example 11, a 4 mm thick alloy sheet after subjected to the intermediate heat treatment (first intermediate heat treatment) at a temperature of 315°C for a time of 30 min was rolled with the draft set to 25%, and the thickness was set to 3 mm. Next, the 3 mm thick rolled sheet was subjected to the intermediate heat treatment (second intermediate heat treatment) at a temperature of 315°C for a time of 30 min, and then further rolled with the draft set to 95% to give a 0.15 mm thick rolled foil.

For Example 12, a 2 mm thick alloy sheet after subjected to the intermediate heat treatment (first intermediate heat treatment) at a temperature of 315°C for a time of 30 min was rolled with the draft set to 50%, and the thickness was set to 1 mm. Next, the 1 mm thick rolled sheet was subjected to the intermediate heat treatment (second intermediate heat treatment) at a temperature of 315°C for a time of 30 min, and then further rolled with the draft set to 85% to give a 0.15 mm thick rolled foil.

For Example 13, a 1 mm thick alloy sheet after subjected to the intermediate heat treatment (first intermediate heat treatment) at a temperature of 315°C for a time of 30 min was rolled with the draft set to 40%, and the thickness was set to 0.6 mm. Next, the 0.6 mm thick rolled sheet was subjected to the intermediate heat treatment (second intermediate heat treatment) at a temperature of 315°C for a time of 30 min, and then further rolled with the draft set to 75% to give a 0.15 mm thick rolled foil.

For Example 14, a 0.4 mm thick alloy sheet after subjected to the intermediate heat treatment (first intermediate heat treatment) at a temperature of 315°C for a time of 30 min was rolled with the draft set to 50%, and the thickness was set to 0.2 mm. Next, the 0.2 mm thick rolled sheet was subjected to the intermediate heat treatment (second intermediate heat treatment) at a temperature of 315°C for a time of 30 min, and then further rolled with the draft set to 25% to give a 0.15 mm thick rolled foil.

For Example 15, a 0.4 mm thick alloy sheet after subjected to the intermediate heat treatment (first intermediate heat treatment) at a temperature of 315°C for a time of 30 min was rolled with the draft set to 55%, and the thickness was set to 0.18 mm. Next, the 0.18 mm thick rolled sheet was subjected to the intermediate heat treatment (second intermediate heat treatment) at a temperature of 315°C for a time of 30 min, and then further rolled with the draft set to 17% to give a 0.15 mm thick rolled foil.

For Comparative Examples 1 to 4, rolled foils were manufactured according to a conventional manufacturing method. More specifically, 1 mm thick alloy sheets were rolled with the draft of one pass set to 5%, and the thickness was set to 0.15 mm. Next, 0.15 mm thick rolled foils were subjected to heat treatment at a temperature of 315°C for a time of 30 min and to ageing heat treatment at a temperature of 60°C for a time of 30 min in the stated order to give rolled foils. For Comparative Example 4, a defect referred to as an edge crack occurred in an edge portion of the sheet during the rolling, and therefore a rolled foil was not able to produce.

For Comparative Examples 5 to 8, rolled foils were manufactured according to a method with a low machining cost among conventional manufacturing methods. More specifically, 1 mm thick alloy sheets were rolled with the draft of one pass set to 5% to give 0.15 mm thick rolled foils. Comparative Examples 5 to 8 were not subjected to heat treatment. For Comparative Example 5, a defect referred to as an edge crack occurred in an edge portion of the sheet during the rolling, and therefore a rolled foil was not able to produce.

**[Table 1]**

| | | Alloy composition (% by mass) | | | | | Foil thickness (mm) | Average value of intervals of misorientation boundaries (µm) | Internal resistance |
|---|---|---|---|---|---|---|---|---|---|
| | | Sn | Ca | Ag | Bi | Pb | | | |
| Ex. | 1 | 1.7 | 0.09 | 0 | 0.002 | Balance | 0.15 | 7 | OK |
| | 2 | 1.4 | 0.06 | 0 | 0.002 | Balance | 0.15 | 12 | OK |
| | 3 | 1.1 | 0.02 | 0 | 0.002 | Balance | 0.15 | 20 | OK |
| | 4 | 1.1 | 0 | 0.02 | 0.002 | Balance | 0.15 | 25 | OK |
| | 5 | 1.4 | 0 | 0 | 0.002 | Balance | 0.15 | 30 | OK |
| | 6 | 1.4 | 0.02 | 0.02 | 0.002 | Balance | 0.15 | 20 | OK |
| | 7 | 0.5 | 0.01 | 0.01 | 0.002 | Balance | 0.15 | 45 | OK |
| | 8 | 0.8 | 0.015 | 0.015 | 0.002 | Balance | 0.45 | 25 | OK |
| | 9 | 1.8 | 0.015 | 0.015 | 0.002 | Balance | 0.45 | 15 | OK |
| | 10 | 1.8 | 0.06 | 0.03 | 0 | Balance | 0.45 | 8 | OK |
| | 11 | 1.4 | 0.02 | 0.02 | 0.002 | Balance | 0.15 | 4 | OK |
| | 12 | 1.4 | 0.02 | 0.02 | 0.002 | Balance | 0.15 | 11 | OK |
| | 13 | 1.4 | 0.02 | 0.02 | 0.002 | Balance | 0.15 | 16 | OK |
| | 14 | 1.4 | 0.02 | 0.02 | 0.002 | Balance | 0.15 | 32 | OK |
| | 15 | 1.4 | 0.02 | 0.02 | 0.002 | Balance | 0.15 | 45 | OK |
| Comp. Ex. | 1 | 1.1 | 0.02 | 0 | 0.002 | Balance | 0.15 | 60 | NG |
| | 2 | 1.1 | 0 | 0.02 | 0.002 | Balance | 0.15 | 90 | NG |
| | 3 | 1.4 | 0 | 0 | 0.002 | Balance | 0.15 | 100 | NG |
| | 4 | 1.7 | 0.09 | 0 | 0.010 | Balance | - | - | - |
| | 5 | 1.4 | 0 | 0 | 0.010 | Balance | - | - | - |
| | 6 | 1.1 | 0.02 | 0 | 0.002 | Balance | 0.15 | 55 | NG |
| | 7 | 1.1 | 0 | 0.02 | 0.002 | Balance | 0.15 | 70 | NG |
| | 8 | 1.4 | 0 | 0 | 0.002 | Balance | 0.15 | 80 | NG |

Next, the surfaces (rolled surfaces) of the produced rolled foils of Examples 1 to 15, Comparative Examples 1 to 3, and Comparative Examples 6 to 8 were analyzed by an electron backscatter diffraction method, and crystal orientation distribution maps were created from the results. Next, the crystal orientation distribution maps were subjected to the same image analysis as above. Then, intersection points of misorientation boundaries between the crystal grains with a crystal misorientation of 5° or more and the specific straight line were extracted, and then the distances between two adjacent intersection points on the same specific straight line among the extracted intersection points were measured. The direction in which the specific straight line extends is set in the same direction as the rolling direction. The total length of the specific straight line used to extract the intersection points was set to 10 mm.

Next, the average value (the unit is pm) of all of the measured distances was calculated. The average value of the distances means the average value of the intervals of the misorientation boundaries between the crystal grains. Table 1 shows the calculation results of the average values of the intervals of the misorientation boundaries between the crystal grains.

Next, bipolar electrodes for bipolar lead storage battery were produced using the rolled foils of Examples 1 to 15, Comparative Examples 1 to 3, and Comparative Examples 6 to 8 as the lead layer for positive electrode. Then, a bipolar lead storage battery was manufactured using the electrode. The structures of the electrodes and the bipolar lead storage battery are almost the same as those illustrated in FIG. 1. An active material forming the active material layer for positive electrode is lead dioxide. The thickness of the active material layer for positive electrode is 1.8 mm. An active material forming the active material layer for negative electrode is lead. The thickness of the active material layer for negative electrode is 1.8 mm.

A charge/discharge cycle test in which charge and discharge were repeated was implemented to the manufactured bipolar lead storage batteries. The charge/discharge C-rate was set to 0.2 C. The number of the charge/discharge cycles was set to 1000 cycles. The lead storage battery in which the internal resistance measured after the completion of the charge/discharge cycle test was 120% or less of the initial internal resistance measured before the implementation of the charge/discharge cycle test was determined to be a lead storage battery less likely to cause the rise in the internal resistance, which was indicated as "OK" in Table 1. The lead storage battery in which the internal resistance measured after the completion of the charge/discharge cycle test was more than 120% of the initial internal resistance measured before the implementation of the charge/discharge cycle test was determined to be a lead storage battery likely to cause the rise in the internal resistance, which was indicated as "NG" in Table 1.

The results shown in Table 1 show that the lead storage batteries of Examples 1 to 15 have the average value of the distances of 50 um or less, and therefore the lead storage batteries are lead storage batteries less likely to cause the rise in the internal resistance. In contrast thereto, the results show that the lead storage batteries of Comparative Examples 1 to 3 and Comparative Examples 6 to 8 have the average value of the distances of more than 50 um, and therefore the lead storage batteries are lead storage batteries likely to cause the rise in the internal resistance.

### Reference Signs List

- 1: lead storage battery
- 101: lead layer for positive electrode
- 102: lead layer for negative electrode
- 103: active material layer for positive electrode
- 104: active material layer for negative electrode
- 105: electrolytic layer
- 111: substrate

## Claims

1. A lead alloy comprising:
0.4% by mass or more and 2% by mass less of tin and 0.004% by mass or less of bismuth, with a balance being lead and inevitable impurities, wherein
when image analysis of a crystal orientation distribution map created by analyzing a surface by an electron backscatter diffraction method is performed, intersection points of misorientation boundaries between crystal grains with a crystal misorientation of 5° or more and a straight line extending in one specific direction are extracted, and distances between two of the intersection points adjacent to each other among the extracted intersection points are measured, an average value of the distances is 50 um or less.

2. A lead alloy comprising:
0.4% by mass or more and 2% by mass less of tin and 0.004% by mass or less of bismuth and further at least one of 0.1% by mass or less of calcium and 0.1% by mass or less of silver, with a balance being lead and inevitable impurities, wherein
when image analysis of a crystal orientation distribution map created by analyzing a surface by an electron backscatter diffraction method is performed, intersection points of misorientation boundaries between crystal grains with a crystal misorientation of 5° or more and a straight line extending in one specific direction are extracted, and distances between two of the intersection points adjacent to each other among the extracted intersection points are measured, an average value of the distances is 50 um or less.

3. The lead alloy according to claim 1 or 2,
wherein a content of the bismuth is 0.0004 % by mass or more and 0.004 % by mass or less.

4. The lead alloy according to any one of claims 1 to 3, wherein the average value of the distances is 30 µm or less.

5. A positive electrode for lead storage battery comprising:
a lead layer for positive electrode formed of the lead alloy according to any one of claims 1 to 4; and
an active material arranged on a surface of the lead layer for positive electrode, wherein
a thickness of the lead layer for positive electrode is 0.5 mm or less.

6. The positive electrode for lead storage battery according to claim 5,the positive electrode is for a bipolar lead storage battery.

7. A lead storage battery comprising:
the positive electrode for lead storage battery according to claim 5 or 6.

8. A power storage system comprising:
the lead storage battery according to claim 7,
the power storage system being configured to store power in the lead storage battery.
